# EUROPEAN PATENT APPLICATION

(11) **EP 2 330 599 A2**
(43) Date of publication of application: **08.06.2011**
(21) Application number: 09810230.4
(22) Date of filing: 28.08.2009
(51) Int. Cl.: H01B 1/20

(54) **CONDUCTIVE PASTE COMPOSITION**

(30) Priority: 29.08.2008 KR 20080085124
(71) Applicant: SSCP Co., Ltd., Ansan-si, Gyeonggi-do 425-833 (KR)
(72) Inventor: KIM, Joo Ho, Siheung-si Gyeonggi-do 429-773 (KR); KIM, Hwa Joong, Seoul 139-737 (KR); KIM, In Chul, Yongin-si Gyeonggi-do 448-170 (KR)
(74) Representative: Strehlke, Ingo Kurt
(86) International application number: PCT/KR2009/004843
(87) International publication number: WO 2010/024625

(57) **Abstract**

The present invention relates to a conductive paste composition. The conductive paste composition includes a binder resin including a urethane group present in a main chain or a side chain, especially a binder resin formed from isocyanate and a polymer with at least one hydroxyl group, a fine powder, a glass frit, and a solvent. The conductive paste composition can have a superior physical property, improve productivity and an environmental problem by reducing waste fluid such as aqueous alkaline solution, and form a fine pattern having an improved structure. Accordingly, the paste composition is especially useful for a paste for gravure offset printing.

## Description

### Technical Field

The present invention relates to a conductive paste composition. More particularly, the present invention relates to a conductive paste composition for a gravure offset printing.

### Background Art

As methods for forming electrode patterns of a display apparatus such as a plasma display panel (PDP), a solar cell, an optical filter, and other electronic apparatus, various methods such as an evaporation method, a method using a photosensitive paste, a silk screen printing method, and an inkjet printing method are known.

The method using the photosensitive paste includes steps of screen-printing a paste composition including photosensitive inorganic particles to form a film on a substrate, developing the paste composition by irradiating ultraviolet through a photo mask to remain a pattern on the substrate, and firing the pattern. The method is suitable for a process for a large-area panel. However, because the paste composition is formed on the entire surface of the substate, a large amount of the paste composition should be used. Also, since the several steps should be necessary, the method has a drawback that the productivity is low. Meanwhile, in the silk screen printing method, it is difficult to form a pattern having a fine line width.

In a direct patterning method, the complicated processes reqirued at the method using the photosensivite paste (for example, an exposure process and a developing process) are not necessary, and a pattern having a fine line width can be formed. Accordingly, a gravure offset printing, which is a kind of the direct patterning method, is in the limelight, and a paste composition having a superior physical property to be suitable for the gravure offset printing should be required.

### Disclosure

### Technical Problem

The present invention provides a paste composition having a superior physical property, improving productivity and an environmental problem by reducing waste fluid such as an aqueous alkaline solution, and being capable of forming a fine pattern having an improved structure.

### Technical Solution

Accordingly, a conductive paste composition includes a binder resin including a urethane group present in a main chain or a side chain, a fine powder, a glass frit, and a solvent.

Particularly, a conductive paste composition includes a binder resin formed from a poly isocyanate and a polymer providing a repeating unit represented by following chemical formula 1:

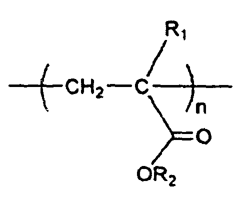

R₁ is H or CH₃.

R₂ is hydrogen; a saturated or unsaturated alkyl group of C₁-C₁₅; or a saturated or unsaturated alkyl group of C₁-C₁₅ including a hydroxyl group, a carboxyl group, an ether group, a carbonyl group, or an ester group.

The n is an integer of 1 to 1,000.

The polymer includes at least one monomer where R₂ is the saturated or unsaturated alkyl group of C₁-C₁₅ including the hydroxyl group.

### Advantageous Effects

The conductive paste composition according to the present invention can have a superior physical property, can improve productivity and an environmental problem by reducing waste fluid such as an aqueous alkaline solution, and can form a fine pattern having an improved structure.

### Best Mode

Hereinafter, the present invention will be described in more detail.

A conductive paste composition according to the present invention includes a binder resin including a urethane group in a main chain or a side chain, a fine powder, a glass frit, and a solvent.

Particularly, the conductive paste composition includes a binder resin formed by poly isocyanate and a polymer formed by polymerizing monomer, a fine powder, a glass frit, and a solvent. The monomer includes at least one monomer where R₂ in above chemical formula 1 is the saturated or unsaturated alkyl group of C₁-C₁₅ including the hydroxyl group. The conductive paste composition according to a preferred embodiment, based on the total weight of the conductive paste composition, the binder resin may be included in an amount of 5 to 30 wt%, the fine powder may be included in an amount of 50 to 90 wt%, the glass frit may be included in an amount of 1 to 10 wt%, and the solvent may be included in an amount of 4 to 30 wt%.

Hereinafter, each of the components will be described.

(1) Binder resin

The binder resin according to the present invention includes the urethane group in the main chain or the side chain.

First, the binder resin including the urethane group in the side chain is not limted. As a preferred example, the binder resin may be formed by a urethane reaction of the poly isocyanate and the polymer. The polymer is formed by polymerizing monomer, and the monomer includes at least one monomer where R₂ in above chemical formula 1 is the saturated or unsaturated alkyl group of C₁-C₁₅ including the hydroxyl group (that is, hydroxyl-containg monomer). The conductive paste composition having the binder resin can have a superior property at an offset process. That is, the conductive paste composition having the binder resin can have superior off property at an off process where the conductive paste composition is transferred from a gravure roll to a blanket roll and have a superior set property at a set process where the conductive paste composition is transferred from the blanket roll to a substrate.

The polymer formed by polymerizing the at least one monomer providing the repeating unit of above chemical formula 1 may include the monomer where R₂ is the saturated or unsaturated alkyl group of C₁-C₁₅ including the hydroxyl group in an amount of 10 to 80 wt%, preferably 10 to 30 wt%. The polymer may be formed by polymerizing through a solution polymerization method using 50 to 80 wt% of the solvent, 1 to 10 wt% of a polymerization initiator, 3 to 40 wt% of the hydroxyl containing monomer, and at least one monomer 20 to 50 wt% selected from a group consisting of a hydroxyl-containing monomer, a carboxyl-containing monomer, an acrylic monomer, a monomer of polystyrene, a monomer of poly methyl methacrylate, and a monomer of poly methacrylate ester.

The hydroxyl-containging monomer may be 2-hydroxy ethyl methacrylate, 2-hydroxy propyl methacrylate, 3-hydroxy propyl methacrylate, etc. The carboxyl-containing monomer may be an acrylic acid, a methacrylic acid, a maleic acid, a fumaric acid, a crotonic acid, an itaconic acid, a citraconic acid, etc. The acrylic monomer may be methyl methacrylate, ethyl methacrylate, n-butyl methacrylate, n-lauryl methacrylate, benzyl methacrylate, glycidyl methacrylate, iso-octyl acrylate, iso-dodecyl methacrylate, etc.

The solvent used at the polymerization may be selected from butyl carbitol acetate (BCA), butyl carbitol (BC), texanol, and a mixture thereof. The polymerization initiator may be selected from 2,2-azobisisobutyronitrile (AIBN), benzoyl peroxide (BPO), butyl peroxide (DTBP), and a mixture thereof.

The binder resin is formed by adding the poly isocyanate to the polymer formed by polymerizing the at least one monomer providing a repeating unit represented by chemical formula 1 and by stirring the same. It is preferable that a weight ratio of the polymer: the poly isocyanate is in a range from 100 : 1 to 100 : 10, preferably, 100 : 1 to 100 : 5. Within the above range, the binder is suitable for the offset printing due to the partial cross-linking between polymer molecules according to a urethane bond generated by a reaction between the isocyanate and the hydroxyl group. Also, within the above range, the glass frit and the metal fine powder can be stably dispersed, and the set property can be improved at the printing. When the weight ratio of the polymer: the poly isocyanate is below 100 : 1, a continuous printing property may be poor. When the weight ratio of the polymer: the poly isocyanate is above 100 : 5, a dispersing property of the paste may be worse by increasing the viscosity of the binder resin, and the off property and the set property may be low. Accordingly, it is possible that the paste composition is not suitable for realizing the fine width.

The poly isocyanate may be an aliphatic or aromatic diisocyanate. Preferably, the poly isocyanate may include at least one of isophorone diisocyanate (IPDI), 2,4-toluene diisocyanate, 2,6-toluene diisocyanate(TDI), 4,4'-diphenylmethane diisocyanate(MDI), 2,4'-diphenylmethane diisocyanate, 4,4'-dicyclohexyl diisocyanate(MDI), para-tetramethyl xylylene diisocyanate(TXMDI), hexamethylene diisocyanate(HDI), etc.

The binder resin has the viscosity of 100 to 100,000 cP (Brookfield HB DVII+), prefarably, about 1,000 to about 50,000 cP. The binder resin has an average molecular weight(Mw) of 1,000 to 100,000. The binder resin may be included in an amount of 5 to 30 wt% based on the total weight of the conductive paste compostion. When the amount is below 5 wt%, the continuous printing property may be low because the ability of transferring the paste composition is poor. When the amout is above 30 wt%, the shape property of an electrode such the straightness property after the printing may be low because the paste composition has the excessively high viscosity.

Next, the binder resin including the urethane group in the main chain is not limted. As a preferred example, the binder resin may be formed by polymerizing a poly alcohol compound having 2 or more hydroxyl groups and a poly isocyanate compound having 2 or more isocyanate groups.

The poly alcohol compound having 2 or more hydroxyl groups is not limited, and a material known and available in the art may be used for the same. Prefarably, the poly alcohol compound may be a dialcohol compound. Poly oxyalkylen glycol where the number of the alkylen group is 2 to 6 may be used, specifically, polyethylene glycol(PEG), polypropylene glycol (PPG), polytetramethylene ether glycol (PTMEG), polyhexamethylene ether glycol (PHMG), ethylene oxide adduct to PPG. The poly isocyanate compound having 2 or more isocyanate groups may be the poly isocyanate as stated above.

(2) Fine powder

The fine powder used at the paste composition according to the present invention may be at least one conductive fine particle selected from a group consisting of silver (Ag), gold (Au), platinum (Pt), rhodium (Rh), palladium (Pd), nickel (Ni), aluminum (A1), and cupper (Cu). The silver is the most preferable. For example, the silver powders has an average particle size of about 0.5 to 5 µm, and has at least one of a sphere shape, a needle shape, a plate shape, and an amorphous shape.

The fine powder may be included in an amount of 50 wt to 90 wt% based on the total weight of the conductive paste composition. When the amount is below 50 wt%, the paste composition may spread out on the substrate since the viscosity of the paste composition is too low. When the amount is above 90 wt%, the printing property at the offset process may be low.

Prefarably, the fine powder may be Ag, or a metal powder formed of a mixture of Ag and 0.1 to 90 mol% (based on Ag) of at least one of Li, K, Ba, Mg, Al, Ca, Co, Ni, Na, Zn, Cu, Hg, Pt, Fe, Cd, Sn, Pb, and Au. The particle size is preferably 0.1 to 1.5µm.

(3) Glass frit

The glass frit may have an average particle size of 1 to 10µm. The glass frit may be at least one glass frit having 43 to 91 wt% of PbO, 21 wt% or less of SiO₂, 25 wt% or less of B₂O₃+Bi₂O₃, 7 wt% or less of Al₂O₃, 20 wt% or less of ZnO, 15 wt% or less of Na₂O+K₂O+Li₂O, 15 wt% or less of BaO+CaO+MgO+SrO. The glass frit may have glass softening temperature of about 320°C to about 520°C, and may have a thermal expansion coefficient of about 62×10⁻⁷/°C to about 110×10⁻⁷/°C. The glass frit may be included in an amount of 1 to 10 wt% based on the total weight of the paste composition. When the amount is below 1 wt%, the incomplete firing may be induced and the resistivity may be high. When the amount is above 10 wt%, the amount of the glass component may be large and the resistivity may be high.

(4) Solvent

The solvent preferably has a boiling point of 150°C to 300°C. For example, the solvent may be butyl carbitol (BC), butyl celosolve (BC), butyl carbitol acetate (BCA), terpineol isomer, terpineol, toluene, and a mixture thereof. The solvent may be included in an amount of 4 to 30 wt% so that the paste composition can have the viscosity of 100 to 100, 000cP, prefarabely, 1,000 to 50,000cP, in order to easily perform the printing process.

(5) Other additives

Also, other additives may be added to the paste composition according to the present invention. For example, a dispersing agent may be added to enhance the dispersion property and to prevent the aggregation and the precipitation. A polymerization inhibitor and an antioxidant may be added to increase the preservative property of the coating composition. An antifoaming agent may be added to decrease bubbles in the paste. A leveling agent and a thixotropic agent may be added to enhance the flatness of the film formed at the printing.

The dispersing agent may be a compound having a polar group having affinity, such as a carboxyl group, a hydroxyl group, and an acid ester. In addition, the dispersing agent may be a high molecular compound a compound having an acid (for example, phosphate ester type compound), copolymer including an acid group, a hydroxyl-containing poly carboxylic acid ester, polysiloxane, a solt of long chain poly aminoamide and an acid ester. As the polymerization inhibitor, the antioxidant, the antifoaming agent, the leveling agent, and the thixotropic agent, generally used materials may be used.

The amount of the additive may be various depending on the amount and the kind of the fine powder. Prefarabely, the additive may be included in an amount of 0.5 to 3 wt% based on the total weight of the paste composition.

The method for manufacturing the paste composition according to the present invention will be described as follows.

First, an organic compound including the binder resin, the glass frit, the solvent, and the other additives is put to a mixing machine, and is dissolved by stirring the same, thereby manufacutirng a organic vehicle. Then, the fine powder is slowly added to the organic vehical while stirring the organic vehicle, and the components are physically mixtured, for example, using a roll mill. The large particles and the impurities are removed by filtering, and then the paste composition may be obtained.

The manufactured paste composition may be printed on a substrate by using gravure offset printing method. Particularly, the paste composition is filled by a blade in a groove formed at the gravure roll where a pattern with a uniform line width is formed, and the paste composition in the groove is transferred to the blanket roll covered with a silicon rubber at the off process. The paste at the blanket roll is transferred to the substrate at the set process in order to form an electrode.

Hereinafter, the present invention will be described in more detail with reference to Embodiments and Comparative Embodiments. However, the following Embodiments are provided to show an example of the present invention, and do not limit the present invention.

**Embodiments**

**Manufacturing for a binder resin**

Manufacturing Example 1

A of solvent was put in a reaction machin, and a mixture solution of a monomer and a polymerization initiator in an auxiliary container was dropped for 2 hours at a reaction temperature of 100°C. The monomer was 10 wt% of 2-hydroxy ethyl acrylate (HEA) and 40 wt% of n-butyl methacrylate (BA). The polymerization initiator was 2 wt% of 2,2-azobisisobutyronitrile (AIBN). The solvent was 50 wt% of butyl carbitol acetate. 1 wt% of isophorone diisocyanate(IPDI) was add to the polymer according to the above, and they were stirred for 3 hours, thereby manufacturing a binder resin having a viscosity of 10,000cP and an average molecular weight of 15,000.

**Manufacturing Example 2**

The binder resin was manufacture as in Manufacuting Example 1, except that the isophorone diisocyanate was included in an amount of 3 wt%. The binder resin had a viscosity of 15, 000cP, and an average molecular weight of 20,000.

**Manufacuring Example 3**

The binder resin was manufacture as in Manufacuting Example 1, except that the isophorone diisocyanate was included in an amount of 5 wt%. The binder resin had a viscosity of 35, 000cP, and an average molecular weight of 40,000.

**Manufacuring Example 4**

A thermometer, a condenser, an agitator, and a heating apparatus were attached to a 4-necks flask. 5 wt% of neopentyl glycol, 5 wt% of 1,4-butylene glycol, 60 wt% of polyol having an average molecular weight of 1,000 were mixed and dissolved at a temperature of 40°C. 30 wt% of toluene diisocyanate was added to the dissolved mixture and reacted at a temperature of 75°C. Poly urethane resin having a viscosity of 30,000cP and having 50% of a solid content was manufactured by butyl carbitol acetate.

**Comparative Manufacuring Example 1**

The binder resin was manufacture as in Manufacuting Example 1, except that the 10 wt% of methyl methacrylate (MMA) was used instead of 2-hydroxy ethyl acrylate (HEA) as a monomer and the isophorone diisocyanate was included in an amount of 5 wt%. The binder resin had a viscosity of 12, 000cP, and an average molecular weight of 10,000.

**Comparative Manufacuring Example 2**

The binder resin was manufacture as in Manufacuting Example 1, except that the isophorone diisocyanate was not included. The binder resin had a viscosity of 8,000cP, and an average molecular weight of 10,000.

Manufacturing for a paste composition

**Embodiments 1 to 4, and Comparative Embodiments 1 and 2**

Paste compositions were manufactured according to following Table 1.

**[Table 1]**

| | Amount (wt %) | Embodiments 1 to 4, and Comparative Embodiments 1 and 2 |
|---|---|---|
| Fine powder | 75 | Ag powder, a sphere shape, average particle size: 1.0 |
| Glass frit | 3 | Bi based material, an amorphous shape, average particle size: 1.2 |
| Binder resin | 15 | Each binder resin manaufuacured by Manafucturing Examples 1 to 4 and Comparative Manufacturing Exmaples 1 and 2 |
| Additive | 3 | A dispersing agent + an antioxidant (EFKA 4300 of CIBA chemical) + an antifoaming agent (AC-300 of KYOEISHA chemical) |
| Solvent | 4 | butyl carbitol acetate (BCA) |

1) An organic compound including the binder resin, the glass frit, the solvent, and the other additives was put to a mixing machine, and is dissolved by substantially stirring the same, thereby manufacutirng a organic vehicle.

2) The fine powder was slowly added to the organic vehical while stirring the organic vehicle.

3) The components were physically mixed using a 3-roll mill.

4) The large particles and the impurities were removed by filtering.

**Experimental Embodiment: Property Evaluation**

The paste compositions manufactured by Embodiments 1 to 4 (E1 to E4 in Table 2), and Comparative Embodiments 1 and 2 (CE1 and CE2) are evaluated by following methods. The results are shown in Table 2.

1) The paste composition was injected to an offset printer, and the paste composition was uniformly filled in the gravure roll by the blade.

2) The paste composition was printed on the glass substrate. The paste composition was continually printed until the offset process was not perfomed.

3) The printed electrode was fired, and the line width, the line thickness and the resistance were measured.

**[Table 2]**

| | E1 | E2 | E3 | E4 | CE1 | CE2 | Note |
|---|---|---|---|---|---|---|---|
| Continous printing ^{a)} (number) | 70 | 80 | 110 | 70 | 50 | 65 | - |
| Line with after firing (µm) | 69 | 68 | 65 | 64 | 72 | 70 | Design numerical value: 80 |
| Thickness after firing (µm) | 6.3 | 6.2 | 6.2 | 6.1 | 5.1 | 5.8 | - |
| Resistance/10cm^{b)} (Ω ) | 7.0 | 7.0 | 6.9 | 7.2 | 7.8 | 7.5 | Line resistance |
| Straightness of electrode^{c)} | good | good | good | good | bad | bad | - |

a) a number of continuous printing: a number being capable of repetitively printing until the residue was at the blanket after the set process

b) Resistance: measuring the line resistance of the electrode having a length of 10cm after firing

c) Straightness of electrode: the difference between the maximum and the minimum of the line width after firing, good: within 5, bad: beyond 5

As shown in the result of Table 2, in the paste composition according to the present invention manufactured by Embodiments 1 to 4, the continuous printing can be possible, the pattern having a fine line width can be formed, and the difference in the line width after firing is low, compared with the paste composition manufactured by Comparative Embodiments 1 and 2. Meanwhile, the properties of Embodiments 1 to 3 where the urethane group was positioned in the side chain are superior than those of Embodiment 4 where the urethane group was positioned in the main chain.

### Industrial Applicability

The present invention provides a paste composition having a superior physical property, improving productivity and an environmental problem by reducing waste fluid such as an aqueous alkaline solution, and being capable of forming a fine pattern having an improved structure. Accordingly, the present invention is considerably useful in the art.

## Claims

1. A conductive paste composition comprising:
a binder resin including a urethane group present in a main chain or a side chain;
a fine powder;
a glass frit; and
a solvent.

2. The conductive paste composition of claim 1, wherein the binder resin is formed from a poly isocyanate, and a polymer formed by polymerizing at least one monomer providing a repeating unit represented by following chemical formula 1: 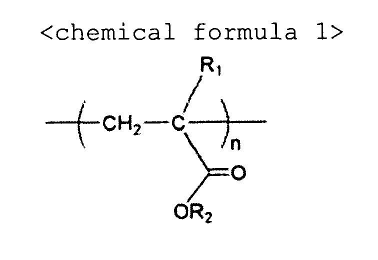 wherein
R₁ is H or CH₃,
R₂ is hydrogen; a saturated or unsaturated alkyl group of C₁-C₁₅; or a saturated or unsaturated alkyl group of C₁-C₁₅ including a hydroxyl group, a carboxyl group, an ether group, a carbonyl group, or an ester group,
n is an integer of 1 to 1,000, and
the polymer includes at least one monomer where R₂ is the saturated or unsaturated alkyl group of C₁-C₁₅ including the hydroxyl group.

3. The conductive paste composition of claim 2, wherein the monomer where R₂ is the saturated or unsaturated alkyl group of C₁-C₁₅ including the hydroxyl group is included in an amount of 10 to 80 wt% based on the total weight of the polymer.

4. The conductive paste composition of claim 1, wherein the binder resin is included in an amount of 5 to 30 wt%, the fine powder is included in an amount of 50 to 90 wt%, the glass frit is included in an amount of 1 to 10 wt%, and the solvent is included in an amount of 4 to 30 wt%, based on the total weight of the conductive paste composition.

5. The conductive paste composition of claim 2, wherein the polymer formed by polymerizing the at least one monomer providing the repeating unit represented by chemical for-mala 1 is formed by polymerizing a hydroxyl-containing monomer and at least one monomer selected from a group consisting of a carboxyl-containing monomer, an acrylic monomer, a monomer of polystyrene, a monomer_of poly methyl methacrylate, and a monomer of poly methacrylate ester.

6. The conductive paste composition of claim 5, wherein the hydroxyl-containing monomer is selected from a group consisting of 2-hydroxy ethyl methacrylate, 2-hydroxy propyl methacrylate, and 3-hydroxy propyl methacrylate.

7. The conductive paste composition of claim 5, wherein the carboxyl-containing monomer is selected from a group consisting of an acrylic acid, a methacrylic acid, a maleic acid, a fumaric acid, a crotonic acid, an itaconic acid, and a citraconic acid.

8. The conductive paste composition of claim 5, wherein the acrylic monomer is selcted from a group consisting of methyl methacrylate, ethyl methacrylate, n-butyl methacrylate, n-lauryl methacrylate, benzyl methacrylate, glycidyl methacrylate, iso-octyl acrylate, and iso-dodecyl methacrylate.

9. The conductive paste composition of claim 2, wherein the poly isocyanate includes at least one selected from a group consisting of isophorone diisocyanate (IPDI), 2,4-toluene diisocyanate, 2,6-toluene diisocyanate(TDI), 4,4'-diphenylmethane diisocyanate(MDI), 2,4'-diphenylmethane diisocyanate, 4,4'-dicyclohexyl diisocyanate (MDI), para-tetramethyl xylylene diisocyanate (TXMDI), and hexamethylene diisocyanate(HDI).

10. The conductive paste composition of claim 2, wherein a weight ratio of the polymer : the poly isocyanate is in a range from 100 : 1 to 100 : 5.

11. The conductive paste composition of claim 1, wherein the binder resin has an average molecular weight of 1,000 to 100,000.

12. The conductive paste composition of claim 1, the solvent has a boiling point of 150°C to 300°C.

13. The conductive paste composition of claim 1, further comprising an additive,
wherein the additive includes at least one selected from a group consisting of a dispersing agent, a polymerization inhibitor, an antioxidant, an antifoaming agent, a leveling agent, and a thixotropic agent.
